## Europäisches Patentamt
## European Patent Office
## Office européen des brevets

(19)

(11) Numéro de publication: **0 070 494 B1**

(12) # FASCICULE DE BREVET EUROPEEN

(45) Date de publication du fascicule du brevet:
19.02.86

(51) Int. Cl.⁴: **G 01 S 15/89**

(21) Numéro de dépôt: 82106232.0

(22) Date de dépôt: 13.07.82

(54) Sonar sous-marin.

(30) Priorité: 17.07.81 FR 8113961

(43) Date de publication de la demande:
26.01.83 Bulletin 83/4

(45) Mention de la délivrance du brevet:
19.02.86 Bulletin 86/8

(84) Etats contractants désignés:
DE FR GB NL

(56) Documents cités:
DE - B - 1 048 517
FR - A - 1 553 107
FR - A - 2 372 441
FR - A - 2 412 853
GB - A - 2 011 076
US - A - 3 005 973
US - A - 3 458 854
US - A - 3 585 578
US - A - 4 075 599

Le dossier contient des informations techniques
présentées postérieurement au dépôt de la demande et
ne figurant pas dans le présent fascicule.

(73) Titulaire: **SINTRA-ALCATEL Société Anonyme dite:,
26, rue Malakoff B.P. 245, F-92600 Asnieres Cedex (FR)**

(72) Inventeur: **Odero, Dominique, 12, Allée Georges
Pompidou, F-94300 Vincennes (FR)**
Inventeur: **Parent, Guy, 81, Bd. du Moulin de la Tour,
F-92350 Le Plessis Robinson (FR)**

(74) Mandataire: **Boireau, Jacques et al, Thomson-CSF
SCPI 173, boulevard Haussmann, F-75379 Paris
Cedex 08 (FR)**

ACTORUM AG

## Description

La présente invention se rapporte aux installations de sondage par échos ou sonar et plus particulièrement à celles permettant de repérer des objects enfouis peu profondément dans le fond de la mer.

On connaît des sonars à balayage latéral permettant de visualiser le fond de la mer et par conséquent les objets posés sur celui-ci. Ces sonars à balayage latéral procèdent à l'analyse du fond marin en le décomposant en bandes étroites juxtaposées correspondant aux lignes de balayage d'une image et en déduisant le profil de chacune de ces bandes du signal d'écho qu'elle renvoie en réponse à une impulsion acoustique d'interrogation. Ils comportent pour ce faire un émetteur d'impulsions acoustiques, un récepteur d'énergie acoustique et un dispositif de traitement de signaux engendrant une image du fond à partir des signaux de l'émetteur et du récepteur. L'émetteur et le récepteur sont embarqués à bord d'un véhicule dit poisson se déplaçant à une vitesse et à une hauteur constante au-dessus du fond marin. L'émetteur alimente deux antennes émettrices qui sont placées symétriquement dans les flancs du poisson et qui présentent chacune un lobe principal de rayonnement dirigé latéralement vers le fond marin, étroit dans la direction de déplacement du poisson et large transversalement à cette direction. Grâce à ces deux antennes émettrices chaque impulsion acoustique d'interrogation insonifie une étroite bande du fond marin perpendiculaire à la direction de déplacement du poisson; elle atteint d'abord cette bande dans la zone la plus proche à la verticale du poisson puis dans les zones de plus en plus éloignées de sorte qu'elle la balaye depuis son point milieu en direction de ses deux extrémités. Le mouvement du poisson translate, entre deux impulsions d'interrogation, l'étroite bande du fond marin susceptible d'être insonifiée et permet la couverture d'un large couloir du fond marin survolé par le poisson. Le récepteur est relié à deux antennes réceptrices analogues aux antennes émettrices et orientées vers l'étroite bande du fond marin insonifiée par l'émetteur. Chaque antenne réceptrice est parfois une antenne dite à faisceaux multiples formés d'un alignement d'antennes élémentaires permettant de séparer, par traitement des signaux des antennes élémentaires, les échos renvoyés par des zones longitudinales de l'étroite bande insonifiée qui peut alors être élargie afin d'autoriser une plus grande vitesse pour le poisson.

Pour obtenir une image du fond avec une bonne résolution il est nécessaire que le système d'antennes ait une ouverture très étroite dans la direction de déplacement du poisson ce qui conduit, pour des raisons de dimensionnement des antennes, à utiliser des impulsions acoustiques d'interrogation de fréquence élevée, de l'ordre du mégahertzs, qui ne pénètrent pratiquement pas dans le sol marin et qui de ce fait sont inadaptées à la détection d'objets enfouis. En outre les faisceaux en nappe des différentes antennes ne permettent pas de minimiser la réverbération du sol qui se présente comme un effet parasite pour la détection des objets enfouis. On sait par ailleurs utiliser l'interaction non linéaire dans le milieu marin de deux ondes acoustiques de haute fréquence pour produire par effet paramétrique une onde acoustique de basse fréquence avec les avantages de directivité liés à la haute fréquence et de pénétration dans le sol liés à la basse fréquence.

On a proposé dans les demandes de brevet français 2 412 853 et 2 372 441 d'utiliser cet effet dans un sonar à balayage latéral semblable à celui décrit plus haut et comportant une antenne sur chaque bord d'un poisson. Chaque antenne est alimentée par une haute fréquence distincte et les ondes acoustiques émises interagissent dans une zone étroite orientée verticalement sous le poisson. Une antenne de réception distincte et unique permet de recevoir les ondes acoustiques basse fréquence renvoyées par le fond marin et de procéder à un certain nombre d'observations et de mesures mais uniquement à la verticale du poisson.

Pour repérer sur toute la largeur d'exploration les objets enfouis peu profondément dans le fond marin, l'invention propose d'alimenter les deux antennes latérales d'un tel sonar simultanément par deux hautes fréquences distinctes ($F_2$, $F_3$), ce qui permet d'obtenir une interaction paramétrique et donc une insonification du fond marin par une onde acoustique basse fréquence ($F_1$) sur toute l'étendue de la zone explorée par le sonar. De plus on profite de ce que la directivité qui peut être obtenue en haute fréquence se garde dans la basse fréquence résultante pour former des voies d'émission permettant une exploration ponctuelle précise. La réception se fait sur deux antennes distinctes adaptées aux basses fréquences reçues et aménagées pour former des voies de réception permettant de séparer encore plus les échos reçus sur des voies d'émission distinctes.

D'autres caractéristiques et avantages de l'invention ressortiront des revendications jointes et de la description ci-après d'un mode de réalisation donné à titre d'exemple. Cette description sera faite en regard du dessin dans lequel:

– la figure 1 est une vue schématique, en coupe verticale longitudinale d'une installation sonar en fonctionnement sur un site de recherche,

– la figure 2 est une vue schématique en coupe verticale transversale selon la ligne II–II de la figure 1,

– la figure 3 est une vue de dessus du véhicule à bord duquel sont embarqués les émetteur et récepteur de l'installation sonar représentée aux figures précédentes,

et la figure 4 est une vue schématique illustrant la disposition des antennes sonar.

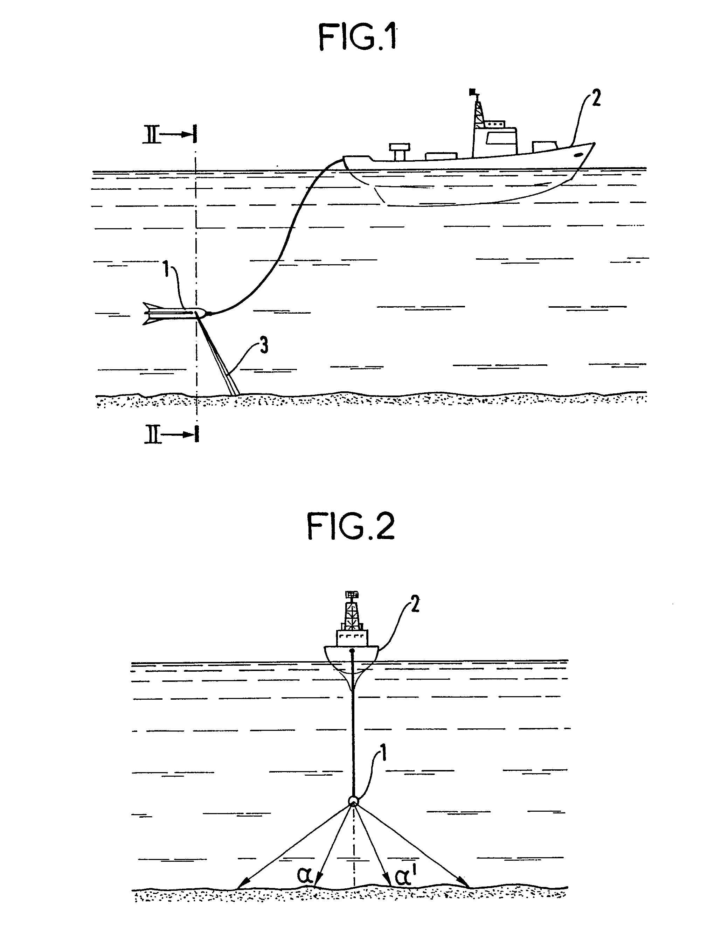

Les figures 1 à 3 illustrent la mise en œuvre d'une installation sonar selon l'invention. Cette dernière est répartie entre un véhicule immergé 1 appelé poisson et un bateau 2 qui le remorque. Le poisson 1 se déplace à une hauteur constante au-dessus du fond et renferme essentiellement les antennes d'émission d'impulsions acoustiques d'interrogation et de réception recevant l'énergie acoustique revenant en écho. Le bateau 2 est équipé d'un système de transmission de signaux le reliant aux antennes du poisson 1 et d'un dispositif de traitement de signaux et de visualisation donnant à partir des signaux émis et reçus par le poisson 1 ainsi que des paramètres de la trajectoire de ce dernier, une image des objets enfouis dans la zone du fond survolée par le poisson 1.

L'installation sonar utilise, pour l'exploration du fond, des impulsions d'énergie acoustique de fréquences suffisamment basse $(F_1)$, de l'ordre de la dizaine de kilohertzs pour pénétrer dans le fond marin ainsi que des impulsions d'énergie acoustique de fréquences élevées $(F_2, F_3)$ de l'ordre de la centaine de kilohertzs ne pénétrant pratiquement pas dans le fond marin. Elle engendre les impulsions d'énergie acoustique de fréquences basses $(F_1)$ par effet paramétrique à partir des impulsions acoustiques de fréquences élevées $(F_2, F_3)$ et procède à une insonification du fond marin par zones de faible surface, sous une incidence inférieure à 70 degrés pour réduire la surface du fond susceptible de réverbérer une impulsion d'énergie acoustique de fréquence basse et pour éviter la réflexion du fond. L'écho d'énergie acoustique de fréquence élevée uniquement dû a la réverbération du sol du fond marin est utilisé pour éliminer dans l'écho d'énergie acoustique basse fréquence la composante due à la réverbération de la surface du fond marin.

Les antennes sonar sont groupées par paires, les deux antennes d'une paire étant identiques, disposées symétriquement l'une à babord, l'autre à tribord du poisson 1 et orientées latéralement vers le fond. Elles se composent d'une paire d'antennes d'émission et de deux paires d'antennes de réception. Les antennes d'émission ont chacune un faisceau de rayonnement ponctuel, c'est-à-dire de quelques degrés d'ouverture, orientable électroniquement dans un demi plan 3 interceptant le fond marin transversalement à la trajectoire du poisson 1 à l'avant ou à l'arrière de ce dernier. L'une des paires d'antennes de réception est sensible à l'énergie acoustique basse fréquence tandis que l'autre est sensible à l'énergie acoustique haute fréquence. Chaque antenne de réception a un faisceau de rayonnement directif nettement plus ouvert que ceux des antennes d'émission et orientable électroniquement de manière à couvrir la surface du fond marin insonifiée par l'antenne d'émission située sur le même bord du poisson 1.

Les deux antennes d'émission sont de type paramétrique ce qui permet d'engendrer simultanément les impulsions acoustiques de fréquence élevée et de fréquence basse et également l'obtention d'une grande directivité aux fréquence basse. Elles sont en outre à formation de voies c'est-à-dire à orientation électronique.

Les antennes paramétriques pour sonar sont bien connues dans la technique. On pourra se rapporter à leur sujet par exemple à l'article de Dominique Odero intitulé «Possibilités et limites des antennes paramétriques émettrices» et paru dans les comptes rendus du 7ème Colloque GRETSI (Nice, juin 1979). Dans ce genre d'antenne, un signal acoustique à une fréquence $F_1$ est obtenu par l'émission simultanée de deux signaux acoustiques de fréquences plus élevées $F_2$ et $F_3$ présentant la fréquence de battement $F_1$ cela, grâce aux caractéristiques non linéaires de propagation des ondes acoustiques dans l'eau. L'émission des deux signaux acoustiques de fréquences élevées peut s'obtenir à l'aide d'un même transducteur électro-acoustique excité par une mélange de deux signaux électriques à ces fréquences si bien qu'une antenne sonar paramétrique peut avoir la configuration d'une antenne sonar classique prévue pour des fréquences élevées dont elle conserve la directivité pour l'effet paramétrique. Comme l'angle d'ouverture du faisceau de rayonnement d'une antenne est, en radians, de l'ordre de $\lambda$/L C$\lambda$ étant la longueur d'onde de radiation et L la dimension de l'antenne dans une direction perpendiculaire au plan de l'angle d'ouverture) il résulte de l'utilisation de l'effet paramétrique un gain important en directivité. On peut obtenir ainsi d'un transducteur électro-acoustique carré de 25 cm de côté excité à l'aide d'un mélange de deux signaux électriques de fréquences de l'ordre de la centaine de kilohertzs avec un battement inférieur de l'ordre de la dizaine de kilohertzs, une émission paramétrique d'un signal acoustique à cette fréquence de battement avec un faisceau de rayonnement ponctuel présentant un angle d'ouverture de l'ordre de 3,6 degrés permettant d'insonifier une surface de l'ordre du mètre carré à une distance de 15 mètres.

La formation de voies s'obtient de manière classique en constituant chaque antenne à partir d'un alignement régulier de transducteurs excités avec différentes versions retardées entre elles d'un même signal fournies par un dispositif électronique de pointage. Comme cela est bien connu, un tel alignement a une direction principale de rayonnement qui lui est perpendiculaire lorsque les transducteurs sont excités par la même version du signal et qui est dévié en direction de l'une de ses extrémités lorsque chaque transducteur est excité avec un certain retard par rapport à celui qui le précède dans l'alignement considéré depuis ladite extrémité. L'angle de déviation $\beta$ s'exprime par la relation bien connue.

$$\sin \beta = \frac{N\Delta c}{D}$$

N étant le nombre de transducteurs de l'alignement, $\Delta$ le retard unitaire entre deux transducteurs consécutifs de l'alignement, c la vitesse de l'onde et D la longueur de l'alignement. En donnant des valeurs quantifiées au retard Δ on définit des directions principales de rayonnement distinctes correspondant à des voies pour l'antenne.

Avec l'antenne paramétrique précitée utilisant un transducteur à base carrée de 25 cm de côté la formation des voies s'obtient en découpant le transducteur en lignes indépendantes avec un écartement inférieur aux demi-longueurs d'ondes des hautes fréquences d'excitation et en alimentant les transducteurs lignes par l'intermédiaire d'un dispositif de pointage électronique engendrant un retard unitaire entre chacun de ces derniers. Le réglage du retard unitaire du dispositif de pointage électronique permet de faire varier la direction principale de rayonnement de l'antenne paramétrique dans un plan d'orientation perpendiculaire au transducteur global et à la direction des transducteurs lignes. On assure une couverture complète d'un secteur plus ou moins grand de ce plan d'orientation en donnant au retard unitaire Δ un certain nombre de valeurs discrètes correspondant à des directions principales de rayonnement présentant un écart unitaire inférieur à l'angle d'ouverture du faisceau de rayonnement de l'antenne paramétrique.

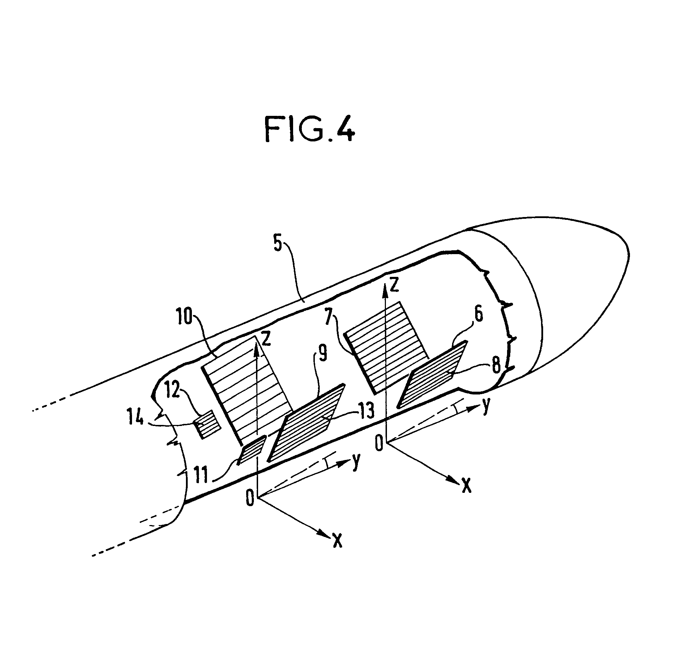

La figure 4 illustre la disposition des antennes sonar dans le poisson 1 dont la coque, à hauteur du compartiment d'antennes, est schématisée par une portion éclatée de cylindre 5. Les antennes d'émission sont formées de deux transducteurs identiques 6, 7 à base plane carrée constitués d'une juxtaposition de transducteurs lignes 8 et disposés en dièdre. Un trièdre d'orientation OXYZ avec un axe OY rappelant la direction de déplacement du poisson 1 et un axe OZ rappelant la verticale en ascendante, repère les orientations des antennes d'émission et montre qu'elles sont disposées symétriquement par rapport à un plan vertical parallèle à la direction de déplacement du poisson 1 de manière à former un dièdre avec une arrête inférieure parallèle aux transducteurs lignes 8 inclinée par rapport à l'horizontale d'un angle de relèvement de 25 degrés vers l'avant du poisson 1. Les faisceaux de rayonnement des deux antennes d'émission ont un plan d'orientation commun qui intercepte le fond marin perpendiculairement à la direction du poisson 1, en avant de ce dernier, sous un angle d'incidence de 65° comme représenté en 3 à la figure 1. Les deux transducteurs 6 et 7 à base plane carrée des antennes d'émission forment un angle dièdre de 60 degrés. Grâce à cette caractéristique de positionnement les directions principales de rayonnement α et α' des antennes d'émission en cas d'excitation synchrone de leurs transducteurs lignes 8 forment également un angle de 60 degrés dans le plan d'orientation commun, chacune étant dans ce plan à 30 degrés de part et d'autre de la projection de la trajectoire du poisson 1. Une formation de voies définissant des directions principales de rayonnement avec un écart angulaire unitaire inférieur à 3,6 degrés et dans une plage de 30 degrés de part et d'autre des directions principales de rayonnement α et α' permet d'assurer une insonification continue du fond dans un couloir centré sur la projection de la trajectoire du poisson 1.

L'insonification du fond, par balayage de zones de faible surface se fait simultanément à babord et à tribord du poisson 1 grâce à une mise en parallèle des antennes d'émission à la sortie d'un dispositif électronique de pointage commun, un transducteur ligne 8 d'ordre n par rapport à l'arête supérieure du transducteur global d'une antenne d'émission étant connecté en parallèle avec le transducteur ligne de même ordre n par rapport à l'arête inférieure du transducteur global de l'autre antenne d'émission. Cette mise en parallèle impose aux antennes d'émission un couplage voie par voie leur conservant un écart angulaire constant de 60 degrés entre leurs directions principales de rayonnement. Cet écart angulaire constant de 60 degrés permet la séparation, par le simple effet de la directivité des antennes de réception, des échos simultanés retournés.

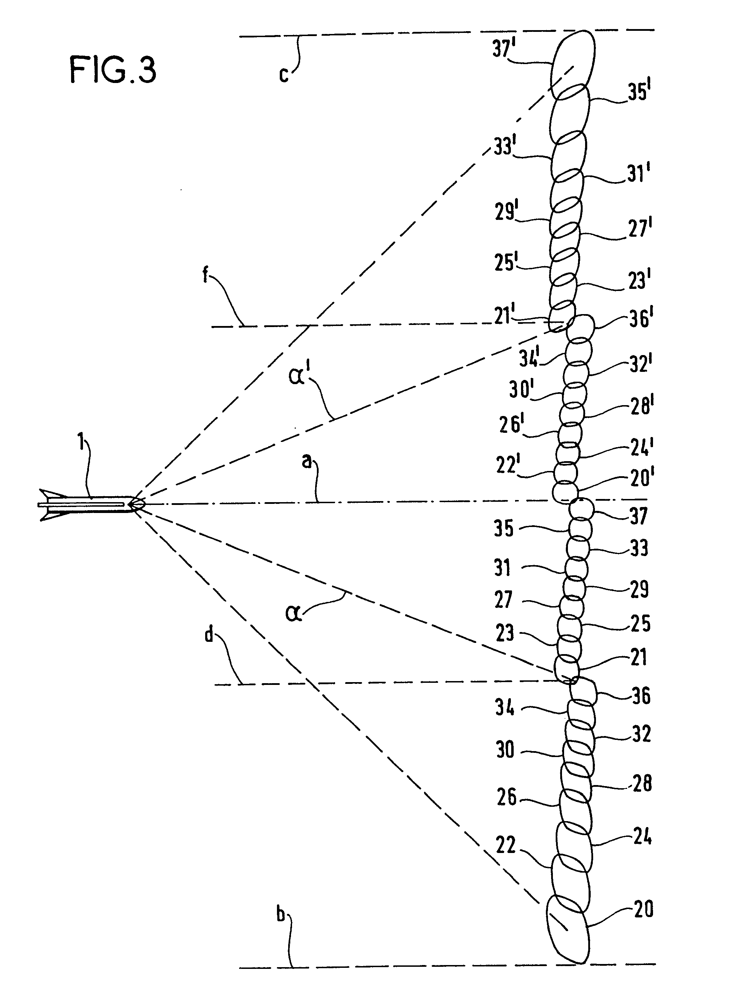

L'insonification du fond se fait à l'aide d'impulsions acoustiques d'interrogation émises par les antennes d'émission en direction de points distincts de zones à faible surface grâce au déplacement du poisson combiné avec un changement de voies des antennes d'émission entre chaque impulsion commandé par le dispositif électronique de pointage. Pour accélérer cette insonification et, par conséquent la vitesse de déplacement du poisson les impulsions acoustiques d'interrogation sont regroupées par trains de deux impulsions successives suivis chacun d'une période de silence mise à profit pour capter les échos en retour des deux paires de zones de faible surface insonifiées successivement. Le balayage des voies des antennes d'émission se fait grâce au dispositif de pointage électronique dans un ordre imposant à chacune d'elle un écart angulaire de pointage d'environ 30 degrés entre les émissions de deux impulsions successives d'un même train afin de permettre une certaine séparation des échos retournés grâce à la directivité des antennes de réception. La figure 3 illustre un découpage du fond en zone de faible surface résultant d'un tel balayage. Le poisson 1 insonifie au fond un couloir centré sur la projection de sa trajectoire et limité de part et d'autre par les lignes pointillés b et c correspondant aux limites de portée latérale des antennes d'émission. Ce couloir est partagé en quatre bandes longitudinales par la projection a de la trajectoire du poisson 1 sur le fond et par deux lignes parallèles d et f formées des points du fond vus par les antennes d'émission sous leurs directions principales de rayonnement α, α' au cours du déplacement du poisson 1. Ces quatre bandes sont chacune décomposées par le balayage des voies des antennes d'émission en alignements transversaux de neuf zones de faible surface juxtaposées latéralement sous l'effet du déplacement du poisson 1. Toutes les bandes longitudinales sont balayées latéralement dans le même sens. La bande longitudinale limitée par les lignes b et d à tribord du poisson 1 est balayée simultanément avec la bande longitudinale limitée par les lignes a et f à bâbord du poisson 1 à l'aide des premières impulsions acoustiques de chaque train. La bande longitudinale limitée par les lignes d et a à tribord du poisson 1 est balayée simultanément avec la bande longitudinale limitée par les lignes f et c à bâbord du poisson 1 à l'aide des deuxièmes impulsions acoustiques de chaque train. Les zones de faible surface insonifiées par les impulsions d'interrogation sont repérées sur la figure 3 à tribord du poisson 1 par les chiffres 20 à 37 dans leur ordre d'insonification et, à bâbord du poisson 1, par les mêmes chiffres affectés d'un prime, deux zones portant le même chiffre de part et d'autre du poisson 1 étant insonifiées simultanément par les antennes d'émission.

Comme on peut le voir sur la figure 4 les deux paires d'antennes de réception ont une configuration générale et des orientations analogues à la paire d'antennes d'émission. Chacune d'elles est formée de deux transducteurs à base plane carrée 9, 10 respectivement 11, 12 constitués d'une juxtaposition de transducteurs lignes 13 respectivement 14 et disposés selon un dièdre à 60 degrés symétriquement par rapport à un plan vertical parallèle à la détection de déplacement de poisson 1 et avec une arête inférieure parallèle aux transducteurs lignes 13 ou 14 et inclinée par rapport à l'horizontale d'un angle de relèvement de 25 degrés vers l'avant du poisson 1. Les deux transducteurs à base plane 9, 10 respectivement 11, 12 de chaque paire d'antennes de réception sont mis en parallèle au niveau de leurs transducteurs lignes 13 respectivement 14 de la même manière que les transducteurs à base plane 6, 7 de la paire d'antennes d'émission. Chaque paire d'antennes de réception est reliée à un circuit formateur de faisceaux qui en assure l'orientation électronique en sommant les signaux délivrés par un alignement de transducteurs lignes 13, 14 après les avoir affectés au préalable de retards relatifs fonctions des rangs dans l'alignement des transducteurs lignes 13, 14 qui les ont engendrés. Cette orientation électronique a lieu, du fait de l'analogie des configurations des paires d'antennes dans des plans qui sont parallèles au plan d'orientation 3 de la paire d'antennes d'émission et qui peuvent être considérés comme confondus avec lui, les distances entre les paires d'antennes du poisson 1 étant négligeables par rapport à la distance séparant le poisson 1 du fond.

La paire d'antennes de réception sensibles à l'énergie acoustique basse fréquence réfléchie par le sous-sol marin présente les transducteurs à base plane 9, 10 les plus grands, de l'ordre de 35 cm de côté avec un angle d'ouverture de faisceau de l'ordre de 15 degrés à une dizaine de kilohertzs. La paire d'antennes de réception sensibles à l'énergie acoustique haute fréquence réfléchie par la surface du fond a les transducteurs à base plane 11, 12 les plus petits, de l'ordre de 4 cm de côté pour un même angle d'ouverture d'une quinzaine de degrés à une centaine de kilohertzs.

Les antennes de réception ont au même instant des orientations multiples ou encore plusieurs voies simultanées car leur orientation ou formation de voies résulte d'un traitement dans un circuit formateur de faisceaux des signaux reçus par leur transducteurs lignes, traitement qui est mené parallèlement de diverses façons. Cette propriété est mise à profit pour orienter chaque antenne simultanément dans deux directions différentes pendant la réception des échos provoqués par un train de deux impulsions acoustiques successives, une première direction pointée vers la zone de faible surface à bâbord ou respectivement à tribord du poisson 1 insonifiée par la première impulsion acoustique et une deuxième direction pointée vers la zone de faible surface à bâbord ou à tribord du poisson 1 insonifiée par la deuxième impulsion acoustique.

La directivité des antennes de réception est suffisante pour séparer les échos en provenance de deux zones du fond insonifiées simultanément car ces dernières sont vues du poisson 1 sous un angle de 60 degrés. Elle peut par contre se révéler insuffisante pour séparer les échos en provenance de deux zones du fond insonifiées par deux impulsions successives et vues du poisson sous un angle de 30 degrés seulement. Dans ce dernier cas, il est avantageux de différencier les deux impulsions successives d'un train par un code qui se retrouve dans leurs échos respectifs et permet alors de les distinguer. On utilise par exemple des impulsions acoustiques modulées linéairement en fréquence, la première impulsion d'un train avec une fréquence instantanée croissante et la deuxième avec une fréquence instantanée décroissante.

Le dispositif de traitement de signaux et de visualisation décorrèle les échos haute et basse fréquences en provenance de chaque zone à faible surface insonifiée sur le fond marin, calcule l'énergie des composantes décorrélées de chaque écho basse fréquence et délivre une image dont chaque point ou tache a une tonalité fonction de l'énergie des composantes décorrélées de l'écho basse fréquence renvoyé par la zone à faible surface insonifiée sur le fond à laquelle il corresponde. Pour ce faire il utilise les techniques classiques de traitement de signaux et de visualisation.

**Revendications**

1. Sonar comportant un émetteur d'impulsions acoustiques et un récepteur d'énergie acoustique montés sur un véhicule (1) se déplaçant au-dessus du fond marin, ainsi qu'un dispositif de traitement de signaux et de visualisation engendrant à partir des signaux de l'émetteur et du récepteur et des paramètres du déplacement du véhicule une image des objets enfouis dans le fond marin, dans lequel l'émetteur d'impulsions acoustiques comprend deux antennes (6, 7) identiques disposées latéralement dans les flancs du véhicule (1) symétriquement sur chaque bord en étant pointées vers le fond marin avec un angle d'incidence inférieur à 70° dans un plan qui intercepte celui-ci transversalement à la direction de déplacement du véhicule, et le récepteur d'énergie acoustique comprend deux antennes (9, 10) disposées et orientées pareillement aux antennes émettrices, caractérisé en ce que les antennes émettrices (6, 7) sont des antennes paramétriques à rayonnement ponctuel et à formation de voies destinées à fonctionner simultanément sur deux hautes fréquences distinctes $(F_2, F_3)$ et à insonifier des zones ponctuelles du fond marin sous la commande d'un dispositif électronique de pointage assurant le balayage desdites voies, ces antennes étant formées de deux bases planes (6, 7) identiques constituées d'une juxtaposition de transducteurs lignes (8) et qui forment dans le véhicule un dièdre disposé symétriquement par rapport au plan vertical parallèle à la direction de déplacement du véhicule (1) avec une arête inférieure perpendiculaire au plan des voies, et que les antennes réceptrices (9, 10) sont des antennes à formation de voies destinées à fonctionner sur une basse fréquence $(F_1)$ égale à la différence des deux hautes fréquences $(F_2, F_3)$ et à recevoir dans des directions déterminées par le dispositif électronique de pointage en fonction du balayage à l'émission les impulsions acoustiques réémises par le fond marin, ces antennes étant de même structure et de même orientation que les antennes d'émission.

2. Sonar selon la revendication 1, caractérisé en ce que les arêtes inférieures des antennes d'émission (6, 7) et de réception (9, 10) sont inclinées par rapport à l'horizontale de manière à ce que le plan des voies intercepte le fond marin en avant ou en arrière de la verticale du véhicule (1).

3. Sonar selon l'une quelconque des revendications 1 et 2, caractérisé en ce que les antennes d'émission (6, 7) sont couplées en parallèle voie par voie de manière à avoir constamment deux directions de pointage divergentes.

4. Sonar selon la revendication 3, caractérisé en ce que les deux antennes paramétriques (6, 7) ont un couplage voie par voie leur conservant un écart angulaire de pointage constant.

5. Sonar selon une quelconque des revendications 1 à 4, caractérisé en ce que l'émetteur comporte des moyens pour moduler linéairement en fréquence les impulsions acoustiques.

6. Sonar selon la revendication 5, caractérisé en ce que l'émetteur comporte des moyens pour délivrer un train répétitif de deux impulsions successives modulées linéairement en fréquence l'une avec une fréquence instantanée croissante, l'autre décroissante.

7. Sonar selon la revendication 6, caractérisé en ce que le dispositif électronique de pointage oriente les deux impulsions successives d'un train vers deux voies différentes présentant un écart de pointage constant.

8. Sonar selon l'une quelconque des revendications 1 à 7, caractérisé en ce que les bases planes des deux antennes paramétriques forment un dièdre d'environ 60 degrés avec une arête inférieure relevée d'environ 25 degrés vers l'avant du véhicule.

**Patentansprüche**

1. Sonargerät, bestehend aus einem Sender für akustische Impulse und einem Empfänger akustischer Energie, die beide auf einem sich über Meeresgrund fortbewegenden Fahrzeug (1) montiert sind, sowie aus einer Signalverarbeitungs- und -anzeigevorrichtung, in der aufgrund der Sende- und Empfangssignale sowie der Bewegungsparameter des Fahrzeugs ein Bild von den im Meeresgrund steckenden Objekten erzeugt wird, wobei der Sender für akustische Impulse zwei gleiche Antennen (6, 7) aufweist, die seitlich an den Fahrzeugflanken symmetrisch angebracht sind und zum Meeresgrund unter einem Einfallswinkel von weniger als 70° in einer Ebene weisen, die den Meeresgrund senkrecht zur Bewegungsrichtung des Fahrzeugs schneidet, und der Empfänger akustischer Energie zwei Antennen (9, 10) aufweist, die in gleicher Weise wie die Sendeantennen angeordnet und ausgerichtet sind, dadurch gekennzeichnet, dass die Sendeantennen (6, 7) parametrische Antennen mit punktförmiger Ausstrahlung und Ausbildung von Kanälen sind und dazu bestimmt sind, zugleich auf zwei getrennten hohen Frequenzen $(F_2, F_3)$ zu senden und punktförmige Zonen am Meeresgrund unter Steuerung durch ein elektronisches Zielgerät zu bestrahlen, das die Abtastung dieser Kanäle bewirkt, wobei die Antennen von zwei gleichen Grundebenen (6, 7) gebildet werden, die aus einer Überlagerung von Zeilentransduktoren (8) gebildet werden und im Fahrzeug einen symmetrisch bezüglich einer senkrechten und zur Fortbewegungsrichtung des Fahrzeugs (1) parallelen Ebene angeordneten Dieder bilden, dessen Unterkante senkrecht zur Ebene der Kanäle verläuft, während die Empfangsantennen (9, 10) vom Kanalbildungstyp sind und dazu bestimmt sind, bei einer niedrigen Frequenz $(F_1)$ gleich der Differenz der beiden hohen Frequenzen $(F_2, F_3)$ betrieben zu werden und in durch das elektronische Zielgerät bestimmten Richtungen abhängig von der sendeseitigen Abtastung die akustischen Impulse zu empfangen, die vom Meeresgrund zurückgeworfen werden, wobei diese Antennen dieselbe Struktur und dieselbe Richtung wie die Sendeantennen besitzen.

2. Sonargerät nach Anspruch 1, dadurch gekennzeichnet, dass die Unterkanten der Sendeantennen (6, 7) und der Empfangsantennen (9, 10) bezüglich der Waagerechten so geneigt sind, dass die Ebene der Kanäle den Meeresgrund vor oder hinter der Senkrechten durch das Fahrzeug (1) schneidet.

3. Sonargerät nach einem beliebigen der Ansprüche 1 und 2, dadurch gekennzeichnet, dass die Sendeantennen (6, 7) Kanal für Kanal parallel gekoppelt sind, so dass es permanent zwei divergierende Zielrichtungen gibt.

4. Sonargerät nach Anspruch 3, dadurch gekennzeichnet, dass die beiden parametrischen Antennen (6, 7) eine Kopplung Kanal für Kanal besitzen, durch die ein konstanter Winkelabstand der Zielrichtung erhalten bleibt.

5. Sonargerät nach einem beliebigen der Ansprüche 1 bis 4, dadurch gekennzeichnet, dass der Sender Mittel zur linearen Frequenzmodulation der akustischen Impulse besitzt.

6. Sonargerät nach Anspruch 5, dadurch gekennzeichnet, dass der Sender Mittel zur Ausgabe einer repetitiven Folge von zwei aufeinanderfolgenden linear frequenzmodulierten Impulsen aufweist, wobei die einen Impulse mit einer steigenden Augenblicksfrequenz und die anderen Impulse mit einer abnehmenden Augenblicksfrequenz moduliert sind.

7. Sonargerät nach Anspruch 6, dadurch gekennzeichnet, dass das elektronische Zielgerät die beiden aufeinanderfolgenden Impulse einer Folge auf zwei unterschiedliche Kanäle ausrichtet, die einen konstanten Winkelabstand besitzen.

8. Sonargerät nach einem beliebigen der Ansprüche 1 bis 7, dadurch gekennzeichnet, dass die Grundebenen der beiden parametrischen Antennen einen Dieder mit einem Winkel von etwa 60° und einer Unterkante bilden, die in Fahrtrichtung des Fahrzeugs um etwa 25° angehoben ist.

## Claims

1. A sonar device including a generator for transmitting acoustic pulses, and a receiver for receiving acoustic energy, both mounted on a vehicle (1) which travels above sea-bottom, and a signal processing and display device which, on the basis of the generator signals and the receiver signals and of the vehicle displacement parameters, produces an image of the objects which are hidden in the sea-bottom, the acoustic pulse generator comprising two identical antennas (6, 7) disposed laterally in the flanks of the vehicle (1) symmetrically on both sides and pointed to the sea-bottom with an angle of incidence smaller than 70° in a plane intercepting the sea-bottom transversally with respect to the vehicle displacement direction, and the acoustic energy receiver comprising two antennas (9, 10) disposed and pointed in the same way as the transmitting antennas, characterized in that the transmitting antennas (6, 7) are parametric antennas with punctiform radiation and with channel formation, these antennas being conceived to operate simultaneously at two distinct high frequencies ($F_2$, $F_3$) and to irradiate punctiform zones of the sea-bottom under the control of an electronic pointing device ensuring the scanning of said channels, these antennas being constituted of two identical plane bases (6, 7) constituted by a juxtaposition of line transducers (8), and building up a dihedron in the vehicle disposed symmetrically with respect to the vertical plane which is parallel to the vehicle (1) displacement direction, the lower edge of the dihedron being perpendicular to the plane of the channels, and that the reception antennas (9, 10) are antennas of the channel formation type conceived to operate at a low frequency ($F_1$) equal to the difference between the two high frequencies ($F_2$, $F_3$) and to receive the acoustic pulses re-transmitted by the sea-bottom in directions which are determined by the electronic pointing device in dependence of the transmission scanning, these antennas having the same structure and the same orientation as the transmission antennas.

2. A sonar device according to claim 1, characterized in that the lower edges of the transmission antennas (6, 7) and of the reception antennas (9, 10) are inclined with respect to the horizontal line in such a way that the channel plane intercepts the sea-bottom in front of or behind the vertical line of the vehicle (1).

3. A sonar device according to any one of claims 1 or 2, characterized in that the transmission antennas (6, 7) are parallelly coupled channel by channel in such a way that there exist constantly two divergent pointing directions.

4. A sonar device according to claim 3, characterized in that the two parametric antennas (6, 7) are coupled channel by channel in such a way that a constant angular pointing distance between them is conserved.

5. A sonar device according to any one of claims 1 to 4, characterized in that the generator comprises means for modulating the acoustic pulses linearly with frequency.

6. A sonar device according to claim 5, characterized in that the generator comprises means for supplying a repetitive train of two successive pulses which are linearly frequency modulated, one with an increasing instant frequency, the other with a decreasing instant frequency.

7. A sonar device according to claim 6, characterized in that the electronic pointing device directs the two successive pulses of a train onto two different channels having a constant pointing distance.

8. A sonar device according to any one of claims 1 to 7, characterized in that the plane bases of the two parametric antennas constitute a dihedron of about 60°, the lower edge thereof being raised forwardly to the front of the vehicle for about 25°.

# FIG.1

# FIG.2

FIG.3

0 070 494

11

# FIG.4